# EUROPÄISCHE PATENTSCHRIFT

(11) **EP 3 430 893 B1**
(45) Veröffentlichungstag und Bekanntmachung des Hinweises auf die Patenterteilung: **01.11.2023**
(21) Anmeldenummer: 18184628.8
(22) Anmeldetag: 20.07.2018
(51) Int. Cl.: A01K 3/00

(54) **ANORDNUNG ZUR VERHINDERUNG DER PASSAGE VON TIEREN**
ARRANGEMENT FOR PREVENTING THE PASSAGE OF ANIMALS
AGENCEMENT D'EMPÊCHEMENT DU PASSAGE DES ANIMAUX

(30) Priorität: 22.07.2017 DE 202017003897 U
(43) Veröffentlichungstag der Anmeldung: 23.01.2019
(73) Patentinhaber: Faß, Frank, 27313 Dörverden (DE)
(72) Erfinder: Faß, Frank, 27313 Dörverden (DE)
(74) Vertreter: Gramm, Lins & Partner Patent- und Rechtsanwälte PartGmbB

(56) Entgegenhaltungen:
- WO-A1-2009/149741
- FR-A1- 2 621 345
- GB-A- 2 206 906
- US-A- 2 476 233
- US-A- 3 614 844
- US-A- 4 708 322

## Beschreibung

Die Erfindung betrifft eine Anordnung zur Verhinderung der Passage von Tieren.

Im Zuge der zunehmenden Globalisierung hat sich auch der internationale Handel weiter ausgedehnt. Das betrifft nicht nur Produkte der Industrieproduktion, sondern auch in ebensolchem Maße den Sektor der landwirtschaftlichen Produktion. Um diesem Trend gerecht zu werden, hat man begonnen, die Agrarwirtschaft zu intensivieren.

Es ist nicht nur historisch bedingt, sondern hängt auch mit dem milden Klima in Mitteleuropa zusammen, dass ein großer Teil der Tierhaltung auf freien, unüberdachten Weideflächen stattfindet. Um sowohl das Ausbrechen von Vieh als auch das Eindringen fremder Tiere in diese abgegrenzten Gebiete effektiv zu verhindern, werden Elektrozäune unterschiedlicher Bauart aufgestellt. Dabei schwankt die Höhe ebenso wie der Abstand und die Anzahl der elektrischen Leiter. Doch diesen Weidezäunen haftet ein wesentlicher Mangel an, der im Folgenden erläutert wird.

Diese Elektrozäune werden jeweils von einem Hochspannungsgenerator versorgt, der in bestimmten Zeitabständen positive Hochspannungsimpulse definierten Energieinhaltes abgibt. Der Pluspol wird an die elektrischen Leiter des Zaunes geführt, während der negative Pol über einen sogenannten Erdspieß mit der Erde schlüssig verbunden ist. Dadurch wird eine hohe Potentialdifferenz gegenüber der Erde aufgebaut. Damit sollen die Tiere innerhalb des umzäunten Gebietes abgehalten werden, den Zaun zu berühren, ebenso auch die Tiere, die außerhalb des Zaunes versuchen, in dieses Gebiet einzudringen.

Derartige Hochspannungsgeneratoren sind üblicherweise Bestandteile von aus dem Stand der Technik bekannten Weidezaungeräten. Solche Weidezaungeräte weisen in der Regel einen Zaunanschluss (positiver Anschluss) und einen Erdungsanschluss (negativer Anschluss) auf. Der Zaunanschluss ist dabei dazu bestimmt, mit einem elektrisch leitenden Teil des Elektrozauns verbunden zu werden, während der Erdungsanschluss dazu bestimmt ist, mit einem in das Erdreich eingetriebenen Erdspieß verbunden zu werden.

Aufwachsendes Gras oder andere Pflanzen, die einen oder mehrere elektrische Leiter des Zaunes berühren, stellen dabei allerdings einen Nebenschlusswiderstand gegenüber der Erde dar. Diese ungewollte Ableitung schafft Verluste, die so groß werden können, dass die Wirksamkeit des Zaunes nicht mehr gewährleistet ist.

Im Folgenden sollen einige Beispiele dafür aufgeführt werden, welche Möglichkeiten man bereits untersucht hat, um den Einfluss der aufwachsenden Pflanzen zu umgehen bzw. auszuschließen. Es sind bereits zahlreiche Erfindungen vorgestellt worden, die trotz dieses unerwünschten Nebeneffektes eine wirksame Umfriedung der Weideflächen ermöglichen.

In der Gebrauchsmusterschrift DE 20 2009 018 788 U1 wird ein Wildschutz- und Weidezaun, netzartig und elektrifiziert, vorgestellt, bei dem ein Freihalteabstand zwischen der Zaununterkante und einer dem Boden entsprechenden Bezugslinie vorgesehen ist. Dieser Erfindung haftet jedoch der Mangel an, dass der Zaun begünstigt durch den Freihalteabstand ein Unterkriechen oder Freigraben ermöglicht.

Das Gebrauchsmuster G 81 25 546.2 (DE8125546U) enthält den Vorschlag, den störenden Einfluss aufwachsender Pflanzen derart zu unterbinden, dass die zuvor freigemähte Fläche unterhalb des zu errichtenden Zaunes mit einer lichtundurchlässigen Papier- oder Folienbahn abgedeckt, wird, die einen Pflanzenwuchs durch Lichtentzug verhindert. Dieser Vorschlag scheint aber nicht praktikabel zu sein, da er durch die zusätzlichen Maßnahmen kostenintensiv ist.

In der Europäischen Patentanmeldung EP 2 936 978 A1 wird ein Schutzzaun zum Schutz von Flächen und Einrichtungen vor Wildtieren vorgeschlagen, der aus zwei Zaunabschnitten besteht. Um ein Untergraben zu verhindern, wird die Auslage von Drahtnetzen vorgeschlagen. Erfahrungen mit Wölfen haben jedoch gezeigt, dass diesen Tieren durch intensives Graben auch eine Untertunnelung gelingt.

In der Offenlegungsschrift DE 10 2015 002 013 A1 wird eine Umfriedung vorgestellt, die speziell für Kleintiere gedacht ist, die sich innerhalb des eingezäunten Gebietes befinden. Der Unterkriechschutz besteht aus einem senkrecht aufgehängten Netz, das waagerecht in die Umfriedung hinein ausläuft. Für größere Tiere wie z. B. Wölfe dürfte dies jedoch kein Hindernis für eine Untertunnelung sein.

Aus US 4 708 322 A ist ein Tor für einen Weidezaun bekannt, das dazu dient, ein einfaches und schnelles Passieren mit einem Fahrzeug zu ermöglichen und zugleich das auf der umzäunten Fläche befindliche Vieh vom Passieren des Tors abzuhalten. Zu diesem Zweck weist das Tor senkrecht hängende elektrische Leitern auf, die mit einer Spannungsquelle verbunden werden können. Während die hängenden elektrischen Leiter das Vieh effektiv abhalten können, werden Sie beim Durchfahren des Tors mit einem Fahrzeug einfach zur Seite geschoben. Ähnliche Tore für Weidezäune mit senkrecht hängenden elektrischen Leitern sind aus US 2 476 233 A und aus GB 2 206 906 A bekannt.

US 3 614 844 A offenbart ein Fluttor für einen Weidezaun, das dazu dient, den Weidezaun über Bodenvertiefungen hinweg erstrecken zu können. Das Fluttor weist hängende elektrische Leiter auf und kann z. B. an Erosionsrinnen, Sturzrinnen, kleinen Bächen und trockenen Bachbetten eingesetzt werden.

WO 2009/149741 A1 offenbart eine Vorrichtung zum Füttern von Tieren, bei der unter einem Trog ein vorhangartiges Element angeordnet ist, das mit einer elektrischen Spannung beaufschlagt werden kann. Die Vorrichtung dient dazu, zu verhindern, dass das Tier während des Fütterns im Bereich unter dem Trog gegen eine Wand tritt.

Aus FR 2 621 345 A1 ist eine Vorrichtung bekannt, die dazu dient, Kühe durch ein Zugangstor zu einem Melkstand zu treiben. Die Vorrichtung hat zu diesem Zweck flexible Wände, wobei jede Wand eine Stange aufweist, an der elektrische Drähte aufgehängt sind, die mit einer elektrischen Spannung beaufschlagt werden können.

Ausgehend hiervon ist es Aufgabe der vorliegenden Erfindung, eine Möglichkeit zur Verhinderung der Passage von Tieren bereitzustellen, welche die oben aufgezeigten Mängel vermeidet.

Diese Aufgabe wird erfindungsgemäß gelöst durch eine Anordnung zur Verhinderung der Passage von Tieren mit den Merkmalen des Anspruchs 1. Vorteilhafte Ausführungsformen sind in den Unteransprüchen beschrieben.

Es wird demnach eine Anordnung zur Verhinderung der Passage von Tieren vorgeschlagen, die eine Mehrzahl aneinandergereihter und elektrisch miteinander verbundener Vorrichtungen aufweist. Jede Vorrichtung weist eine zwischen zwei Pfosten montierte Traverse auf, wobei an der Traverse senkrecht hängende elektrische Leiter angeordnet sind, die mit einem Zaunanschluss (positiver Anschluss) eines Weidezaungerätes elektrisch leitend verbindbar sind. Die hängenden elektrischen Leiter belassen dabei einen Freihalteabstand zum Untergrund.

Die Begriffe Zaunpfahl und Pfosten werden im Rahmen dieser Anmeldung synonym verwendet. Die Begriffe Zaunanschluss und positiver Anschluss werden ebenfalls synonym verwendet. Auch die Begriffe Erdungsanschluss und negativer Anschluss werden synonym verwendet.

Durch die erfindungsgemäße Ausgestaltung der Vorrichtung wird vorteilhaft erreicht, dass unter der Vorrichtung aufwachsendes Gras oder andere unter der Vorrichtung aufwachsende Pflanzen auf einfache Weise entfernt werden können. Dadurch kann eine Beeinträchtigung der Wirksamkeit der Vorrichtung vermieden und Wölfe können effektiv an einem Betreten der Weideflächen gehindert werden. Des Weiteren bietet die erfindungsgemäße Vorrichtung den Vorteil, dass sie wegen Ihres vergleichsweise einfachen Aufbaus mit geringem Aufwand und damit kostengünstig hergestellt werden kann.

Es wird demnach eine Anordnung zur Verhinderung der Passage von Tieren vorgeschlagen, die eine Mehrzahl von Vorrichtungen der zuvor beschriebenen Art aufweist, die aneinandergereiht und elektrisch miteinander verbunden sind.

Dies bietet den Vorteil, dass eine modular aufgebaute und daher einfach zu errichtende Umzäunung einer Weidefläche geschaffen wird, mit der ein Eindringen von Wölfen effektiv verhindert werden kann.

Der Hängestromleiterzaun dient als Herdenschutzmaßnahme, um Haustiere (z. B. Schafe, Rinder oder auch Pferde) vor Wolfsangriffen zu schützen. Er wird an Zaunpfählen montiert, um dem Wolf an einem Betreten einer Weide, Koppel und/oder ähnlichen Aufenthaltsflächen der Tierhaltung zu hindern. Die an den Zaunpfählen montierte Traverse trägt selbst die miteinander mechanisch und elektrisch verbundenen Hängestromleiter. Beim Versuch des Wolfes, sich zwischen den Hängestromleitern hindurch zu bewegen, bekommt er einen abschreckenden Stromimpuls übertragen.

Die Abstände der Hängestromleiter zueinander sind grundsätzlich als beliebig anzunehmen, genauso wie die Länge, Querschnittsform, Querschnittsdimensionierung und Formgebung der Hängestromleiter. Als Materialien kommen sämtliche Feststoffe - auch in Kombination miteinander - in Frage.

Die Länge der Traverse bzw. Breite des Hängestromleiterzaunes wird den örtlichen Gegebenheiten angepasst, ebenso die Querschnittsform, Querschnittsdimensionierung und Formgebung der Traverse. Als Materialien können sämtliche Feststoffe - auch in Kombination miteinander - verwendet werden.

Die Verbindung der Hängestromleiter mit der Traverse kann in einer üblichen und als bekannt vorauszusetzenden Weise erfolgen. Nach Bedarf können mehrere Hängestromleiterzäune zu einer längeren Gesamteinheit zusammengefügt werden.

In einer vorteilhaften Weiterbildung der Erfindung ist vorgesehen, dass der Freihalteabstand so dimensioniert ist, dass ein manuelles oder maschinelles Mähen von unter den hängenden elektrischen Leitern aufwachsenden Pflanzen möglich ist, ohne die hängenden elektrischen Leiter zu beschädigen oder deren beabsichtigte Wirkung zu stören.

In einer weiteren vorteilhaften Weiterbildung der Erfindung ist vorgesehen, dass der Freihalteabstand, den die hängenden elektrischen Leiter zum Untergrund belassen, zwischen 5 cm und 40 cm beträgt. Vorteilhaft kann der Freihalteabstand insbesondere zwischen 10 cm und 30 cm betragen. Vorteilhaft kann der Freihalteabstand insbesondere zwischen 15 cm und 25 cm betragen. Vorteilhaft kann der Freihalteabstand insbesondere näherungsweise 20 cm betragen.

In einer weiteren vorteilhaften Weiterbildung der Erfindung ist vorgesehen, dass die hängenden elektrischen Leiter eine gestreckte Länge zwischen 0,8 m und 1,8 m aufweisen. Vorteilhaft können die hängenden elektrischen Leiter insbesondere eine Länge zwischen 1,0 m und 1,6 m aufweisen. Vorteilhaft können die hängenden elektrischen Leiter insbesondere eine Länge zwischen 1,2 m und 1,4 m aufweisen. Vorteilhaft können die hängenden elektrischen Leiter insbesondere eine Länge von näherungsweise 1,3 m aufweisen.

In einer weiteren vorteilhaften Weiterbildung der Erfindung ist vorgesehen, dass die hängenden elektrischen Leiter in einem Abstand voneinander angeordnet sind, der zwischen 5 cm und 30 cm beträgt. Vorteilhaft kann dieser Abstand der hängenden elektrischen Leiter insbesondere zwischen 10 cm und 25 cm betragen. Vorteilhaft kann dieser Abstand der hängenden elektrischen Leiter insbesondere zwischen 12 cm und 20 cm betragen. Vorteilhaft kann dieser Abstand der hängenden elektrischen Leiter insbesondere näherungsweise 15 cm betragen.

In einer weiteren vorteilhaften Weiterbildung der Erfindung ist vorgesehen, dass die hängenden elektrischen Leiter als von einem Stahldraht umwundene Kunststoffkordeln ausgebildet sind.

Die hängenden elektrischen Leiter können aber grundsätzlich in einer beliebigen Ausführungsform ausgebildet sein, die eine elektrische Leitfähigkeit gewährleistet, um die hängenden elektrischen Leiter mit einer Hochspannung beaufschlagen zu können.

Die hängenden elektrischen Leiter können beispielsweise auch als elektrisch leitende Ketten und/oder als Drähte und/oder als Litzen und/oder als Kordeln, insbesondere als Stahlketten und/oder Stahldrähte und/oder Stahllitzen und/oder Stahlkordeln ausgebildet sein. Die hängenden elektrischen Leiter können aber beispielsweise auch aus einem Kunststoff gefertigt sein, der von einem elektrischen Leiter umhüllt und/oder umwunden und/oder umwoben und/oder durchsetzt ist. Die hängenden elektrischen Leiter können dabei insbesondere als von einem elektrischen Leiter umhüllte und/oder umwundene und/oder umwobene und/oder durchsetzte Kunststoffkordeln ausgebildet sein.

In einer weiteren vorteilhaften Weiterbildung der Erfindung ist vorgesehen, dass die Traverse aus einem Stahlrohr besteht.

Die Traverse kann aber grundsätzlich in einer beliebigen Ausführungsform ausgebildet sein, die es erlaubt, an der Traverse die senkrecht hängenden elektrischen Leiter anzuordnen.

Denkbar ist beispielsweise auch, dass die Traverse aus einem gespannten Seil und/oder einem gespannten Draht besteht. Das gespannte Seil kann dabei insbesondere ein Stahlseil sein. Der gespannte Draht kann dabei insbesondere ein Stahldraht sein. Das gespannte Seil und/oder der gespannte Draht können grundsätzlich aber auch aus anderen Materialien gefertigt sein.

In einer weiteren vorteilhaften Weiterbildung der Erfindung ist vorgesehen, dass die hängenden elektrischen Leiter elektrisch leitend miteinander verbunden sind.

In einer vorteilhaften Weiterbildung der Erfindung ist vorgesehen, dass die die senkrecht hängenden elektrischen Leiter durch Gewichte beschwert sind, um Beeinträchtigungen der Funktion durch starke Luftströmungen zu verhindern.

Denkbar ist auch eine Vorrichtung zur Verhinderung der Passage von Tieren, bei der an einer Traverse senkrecht hängende elektrische Leiter angeordnet sind, die mit dem positiven Anschluss eines Weidezaungerätes elektrisch leitend verbunden sind, wobei der negative Anschluss des Weidezaungerätes eine elektrisch leitende Verbindung zum ebenfalls elektrisch leitenden Untergrund besitzt, wobei die hängenden elektrischen Leiter einen Freihalteabstand zum Untergrund belassen, dergestalt, dass ein manuelles oder maschinelles Mähen der unter den Leitern aufwachsenden Pflanzen möglich ist, ohne diese zu beschädigen oder die beabsichtigte Wirkung zu stören und dass die gesamte Vorrichtung wie ein Zaunfeld zwischen zwei Pfosten befestigt ist.

In einer vorteilhaften Weiterbildung der Vorrichtung sind die senkrecht hängenden elektrischen Leiter derart beschwert, dass starke Luftströmungen keine Beeinträchtigung der Funktion bewirken.

Dies bietet den Vorteil, dass auch hängende elektrische Leiter eingesetzt werden können, die als solche lediglich ein geringes Gewicht aufweisen, ohne dass die Funktion der erfindungsgemäßen Vorrichtung beispielsweise durch starken Wind beeinträchtigt wird.

Die Erfindung erlaubt es, dass mehrere solcher Zaunfelder in beliebiger Anzahl aneinandergereiht und miteinander elektrisch verbunden werden können.

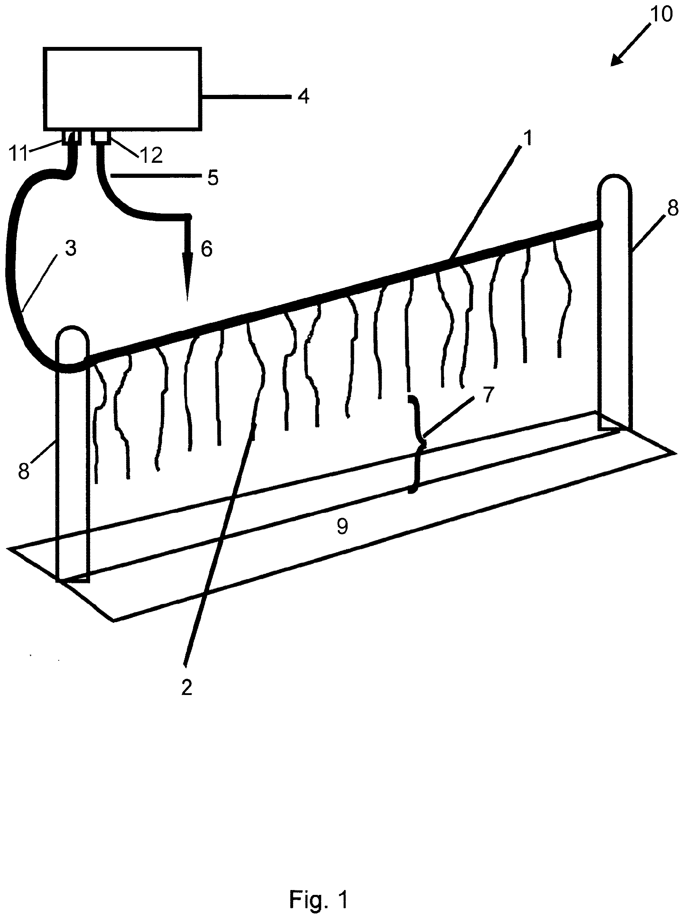

Die Erfindung wird nachfolgend anhand des in der beigefügten Figur 1 gezeigten Ausführungsbeispiels beispielhaft näher erläutert.

Die Figur 1 zeigt eine schematische Darstellung einer beispielhaften Vorrichtung 10 zur Verhinderung der Passage von Tieren. An einer Traverse 1, die aus einem Stahlrohr von 20 mm Durchmesser besteht, eine Länge von 2,50 m besitzt und zwischen zwei Pfosten 8 in einer Höhe von 1,50 m montiert ist, sind im gegenseitigen Abstand von 15 cm Kunststoffkordeln 2 angebracht, die von einem Stahldraht derart umwunden sind, dass eine Berührung zur Übertragung einer daran anliegenden Hochspannung führt. Sie haben eine gestreckte Länge von 1,30 m, sodass eine Freifläche mit einer Höhe von 20 cm erhalten bleibt. Der Freihalteabstand 7, den die Kunststoffkordeln 2 zum Untergrund 9 belassen, beträgt in diesem Ausführungsbeispiel somit 20 cm.

Die einzelnen Kunststoffkordeln 2 sind untereinander elektrisch leitend verbunden. Sie werden über die Verbindungsleitung 3 an den positiven Anschluss 11 eines hinreichend bekannten Weidezaungerätes 4 angeschlossen. Der negative Anschluss 12 des Weidezaungerätes 4 wird über ein Erdungskabel 5 an einen Erdspieß 6 geführt, der in mittelbarer Nähe der Vorrichtung 10 so tief in das Erdreich eingetrieben ist, dass an der Vorrichtung 10 ein Hochspannungspotential gegen Erde messbar ist, in einer Höhe, wie sie für Wölfe vorgeschrieben oder empfohlen wird.

Sobald ein Wolf versucht, die Vorrichtung 10 zu passieren, kommt er mit mindestens einer elektrisch leitenden Kordel 2 in Berührung und erfährt einen Spannungsschlag. Dieser schreckt ihn vor weiterem Eindringen ab.

Der Freihalteabstand 7 von 20 cm ist ausreichend, um ein manuelles oder maschinelles Abmähen aufwachsender Pflanzen zu ermöglichen, die andernfalls durch eine Berührung mit den elektrisch leitenden Kordeln 2 einen elektrischen Feinschluss gegen das Erdpotential bewirken würden, der die Hochspannung soweit reduzieren könnte, dass die abschreckende Wirkung für Wölfe nicht mehr gegeben wäre.

## Patentansprüche

1. Anordnung zur Verhinderung der Passage von Tieren, die eine Mehrzahl aneinandergereihter und elektrisch miteinander verbundener Vorrichtungen (10) aufweist, wobei jede Vorrichtung (10) eine zwischen zwei Pfosten (8) montierte Traverse (1) aufweist, wobei an der Traverse (1) senkrecht hängende elektrische Leiter (2) angeordnet sind, die mit einem Zaunanschluss (11) eines Weidezaungerätes (4) elektrisch leitend verbindbar sind, wobei die hängenden elektrischen Leiter (2) einen Freihalteabstand (7) zum Untergrund (9) belassen.

2. Anordnung nach Anspruch 1, **dadurch gekennzeichnet, dass** der Freihalteabstand (7) zwischen 5 cm und 40 cm, insbesondere zwischen 10 cm und 30 cm, insbesondere zwischen 15 cm und 25 cm, insbesondere 20 cm beträgt.

3. Anordnung nach Anspruch 1 oder 2, **dadurch gekennzeichnet, dass** die hängenden elektrischen Leiter eine gestreckte Länge zwischen 0,8 m und 1,8 m, insbesondere zwischen 1,0 m und 1,6 m, insbesondere zwischen 1,2 m und 1,4 m, insbesondere von 1,3 m aufweisen.

4. Anordnung nach einem der vorhergehenden Ansprüche, **dadurch gekennzeichnet, dass** die hängenden elektrischen Leiter in einem Abstand voneinander angeordnet sind, der zwischen 5 cm und 30 cm, insbesondere zwischen 10 cm und 25 cm, insbesondere zwischen 12 cm und 20 cm, insbesondere 15 cm beträgt.

5. Anordnung nach einem der vorhergehenden Ansprüche, **dadurch gekennzeichnet, dass** die hängenden elektrischen Leiter (2) als von einem Stahldraht umwundene Kunststoffkordeln ausgebildet sind.

6. Anordnung nach einem der vorhergehenden Ansprüche, **dadurch gekennzeichnet, dass** die Traverse (1) aus einem Stahlrohr besteht.

7. Anordnung nach einem der vorhergehenden Ansprüche, **dadurch gekennzeichnet, dass** die hängenden elektrischen Leiter (2) elektrisch leitend miteinander verbunden sind.

8. Anordnung nach einem der vorhergehenden Ansprüche, **dadurch gekennzeichnet, dass** die senkrecht hängenden elektrischen Leiter (2) durch Gewichte beschwert sind, um Beeinträchtigungen der Funktion durch starke Luftströmungen zu verhindern.

## Claims

1. An arrangement for preventing the passage of animals comprising a plurality of devices (10) arranged in series and electrically connected with each other, each device (10) comprising a crossbar (1) mounted between two posts (8), wherein vertically drooping electrical conductors (2) are arranged on the crossbar (1) and are electrically conductively connectable to a fence connection (11) of an electric fence device (4), wherein the drooping electrical conductors (2) leave a clearance distance (7) to the ground (9).

2. Arrangement according to claim 1, **characterised in that** the clearance distance (7) is between 5 cm and 40 cm, in particular between 10 cm and 30 cm, in particular between 15 cm and 25 cm, in particular 20 cm.

3. Arrangement according to claim 1 or 2, **characterized in that** the drooping electrical conductors have an elongated length of between 0.8 m and 1.8 m, in particular between 1.0 m and 1.6 m, in particular between 1.2 m and 1.4 m, in particular of 1.3 m

4. Arrangement according to one of the preceding claims, **characterized in that** the drooping electrical conductors are arranged at a distance from one another which is between 5 cm and 30 cm, in particular between 10 cm and 25 cm, in particular between 12 cm and 20 cm, in particular 15 cm.

5. Arrangement according to one of the preceding claims, **characterised in that** the drooping electrical conductors (2) are formed as plastic cords wound around a steel wire.

6. Arrangement according to one of the preceding claims, **characterized in that** the crossbar (1) consists of a steel tube.

7. Arrangement according to one of the preceding claims, **characterized in that** the drooping electrical conductors (2) are electrically conductively connected to each other.

8. Arrangement according to one of the preceding claims, **characterised in that** the vertically drooping electrical conductors (2) are weighted down by weights in order to prevent impairment of the function by strong air currents.

## Revendications

1. Agencement destiné à empêcher le passage des animaux, comprenant une pluralité de dispositifs (10) juxtaposés, reliés électriquement les uns aux autres, chaque dispositif (10) comprenant une traverse (1) montée entre deux poteaux (8), des conducteurs électriques (2) suspendus verticalement étant disposés sur la traverse (1), qui peuvent être reliés de manière électriquement conductrice à un raccord de clôture (11) d'un appareil de clôture de pâturage (4), les conducteurs électriques suspendus (2) laissant une distance de dégagement (7) par rapport au sol (9).

2. Agencement selon la revendication 1,
**caractérisé en ce que** la distance de dégagement (7) est comprise entre 5 cm et 40 cm, en particulier entre 10 cm et 30 cm, en particulier entre 15 cm et 25 cm, en particulier égale à 20 cm.

3. Agencement selon la revendication 1 ou 2,
**caractérisé en ce que** les conducteurs électriques suspendus ont une longueur étirée comprise entre 0,8 m et 1,8 m, en particulier entre 1,0 m et 1,6 m, en particulier entre 1,2 m et 1,4 m, en particulier égale à 1,3 m.

4. Agencement selon l'une des revendications précédentes,
**caractérisé en ce que** les conducteurs électriques suspendus sont disposés à une distance les uns des autres comprise entre 5 cm et 30 cm, en particulier entre 10 cm et 25 cm, en particulier entre 12 cm et 20 cm, en particulier égale à 15 cm.

5. Agencement selon l'une des revendications précédentes,
**caractérisé en ce que** les conducteurs électriques suspendus (2) sont réalisés sous forme de cordons en matière plastique entourés d'un fil d'acier.

6. Agencement selon l'une des revendications précédentes,
**caractérisé en ce que** la traverse (1) est constituée d'un tube en acier.

7. Agencement selon l'une des revendications précédentes,
**caractérisé en ce que** les conducteurs électriques suspendus (2) sont reliés les uns aux autres de manière électriquement conductrice.

8. Agencement selon l'une des revendications précédentes,
**caractérisé en ce que** les conducteurs électriques (2) suspendus verticalement sont lestés par des poids afin d'éviter toute altération de leur fonctionnement par de forts courants d'air.
